(19) Europäisches Patentamt
European Patent Office
Office européen des brevets

(11) Publication number: **0 443 062 B1**

(12) **EUROPEAN PATENT SPECIFICATION**

(45) Date of publication of patent specification: **07.06.95**  (51) Int. Cl.⁶: **B41F 33/00**

(21) Application number: **90103370.4**

(22) Date of filing: **22.02.90**

(54) **Device for inspecting quality of printed matter and method thereof.**

(43) Date of publication of application:
**28.08.91 Bulletin 91/35**

(45) Publication of the grant of the patent:
**07.06.95 Bulletin 95/23**

(84) Designated Contracting States:
**AT CH DE FR GB IT LI NL SE**

(56) References cited:
**EP-A- 0 194 331**
**GB-A- 2 139 348**
**GB-A- 2 159 623**
**US-A- 4 433 438**
**US-A- 4 581 762**

**Patent Abstracts of Japan, vol. 08, no. 228
(P-308)(1665), 19 October 1984; & JP-A-
59109832 (TOPAN INSATSU K.K.) 25 June
1984**

(73) Proprietor: **Komori Corporation
11-1, Azumabashi 3-chome
Sumida-ku
Tokyo (JP)**

(72) Inventor: **Inde, Akihiro, c/o Komory Printing
Machin.Co., Ltd
Toride Factory, 5-1, Higashi 4-chome,
Ibaragi-ken (JP)**
Inventor: **Ebihara, Hiromitsu, c/o Komori Print-
ing, Machinery
Co., Ltd.
Toride Fact. 5-1, Higashi 4-chome,
Ibaragi-ken (JP)**

(74) Representative: **UEXKÜLL & STOLBERG Paten-
tanwälte
Beselerstrasse 4
D-22607 Hamburg (DE)**

# Description

## Background of the Invention

### Field of the Invention

This invention relates to a device for inspecting the quality of printed matter, and to a method for automatically detecting a defective print, for use in an automatic system for the inspection of printed matter.

### Description of the Related Art

Heretofore, the quality inspection of printed matter has been made by a visual 100% inspection after printing, or, by a sampling visual inspection during printing.

However, visual inspection is tedious, not only resulting in fatigue of eyes but also causing a mental and physical strain on the workers, and delivery time of printed matters could not be speeded up due to the increases in time in performing the inspection process.

For this reason, a system is required which automatically performs inspection on the printing machine, or, in the transportation of printed matter.

There has been proposed a system which has a light projector unit to illuminate a line on a final impression cylinder, a camera to receive light from the line, and an image processing unit for comparing picture information from the camera with a reference picture to determine the presence of defects.

However, prior art automatic inspection systems have been defective in that, even if a correction for density fluctuation is made, for example, in the image processing unit, a correct inspection cannot be performed in a sharp density changing area (edge portion) due to a step-out of the printed matter relative to the machine or a minute position deviation during feeding, resulting in a misjudgment.

GB-A-2 159 623 discloses a print inspecting method, wherein the edge tolerance value is written as is in a picture element control data memory. It requires a large-capacity memory.

EP-A-0 194 331 and JP-A59-109 832 disclose a method in which the sensor signal is merely divided into R(ed), G(reen) and B(lue), and processed. It does not describe edge detection.

## Summary of the Invention

With a view to eliminate the above prior art problems of inspection systems, it is a primary object of the present invention to provide a printed matter quality inspection system and a method thereof, which minimizes misjudgment in a sharp density changing area.

The invention provides for a device as claimed in claim 1 and for a method as claimed in claim 5.

The density level of the reference printed image is detected, R-G-B spectrophotometrically for a color printed matter, and the result is stored, this previously inputted reference image information is taken out from the reference memory and differentiated by Sobel operation into the second derivative, the processed image information is compared with the setting value from the setting device to two-dimensionally detect a sharp density changing area in the printed pattern, and the result is stored in the edge memory.

On the other hand, when a printed sheet is transported, the printed pattern is detected, by a R-G-B spectral light receiving device for a color printed matter, to determine the density level, the inspection image information is compared with a switching setting value according to an edge signal for a large change in density of printed pattern from the edge memory to judge the quality of the print. For a black-and-white print, evaluation can be made by a single density level detection.

With the edge control circuit, positive detection of the edge portion can be achieved, thereby enabling correct evaluation of inspection image information of an inspected printed matter without misjudgment.

## Brief Description of the Drawings

Fig.1 is a block diagram of an embodiment according to the present invention.

Figs.2 to 4 are schematic views showing a cylinder and a camera.

Fig.5 is a block diagram of an edge control circuit.

Fig.6 is a schematic view of edge control mainly showing a second derivative calculation by Sober operation.

Fig.7 is a schematic view mainly showing comparison of edge information and inspection image information.

## Description of the Preferred Embodiments

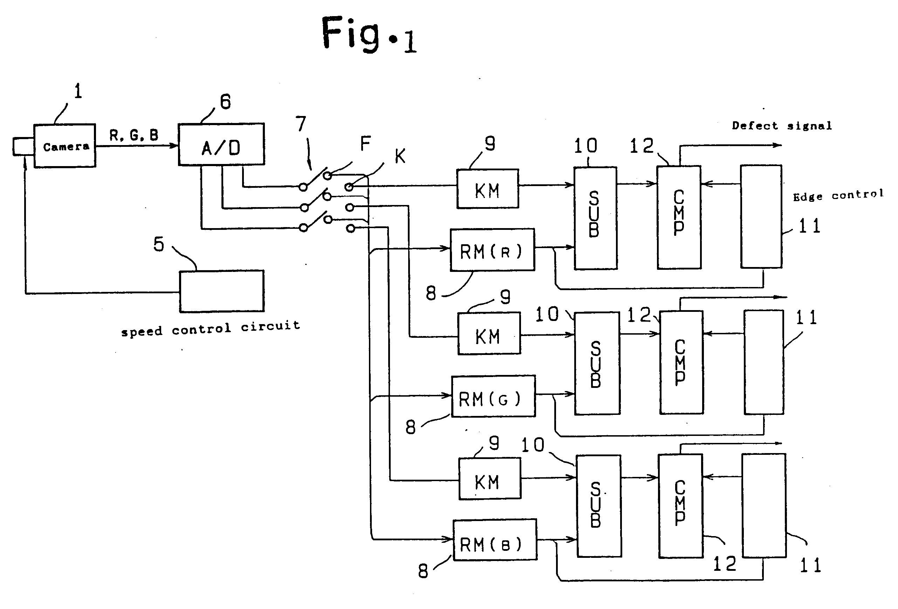

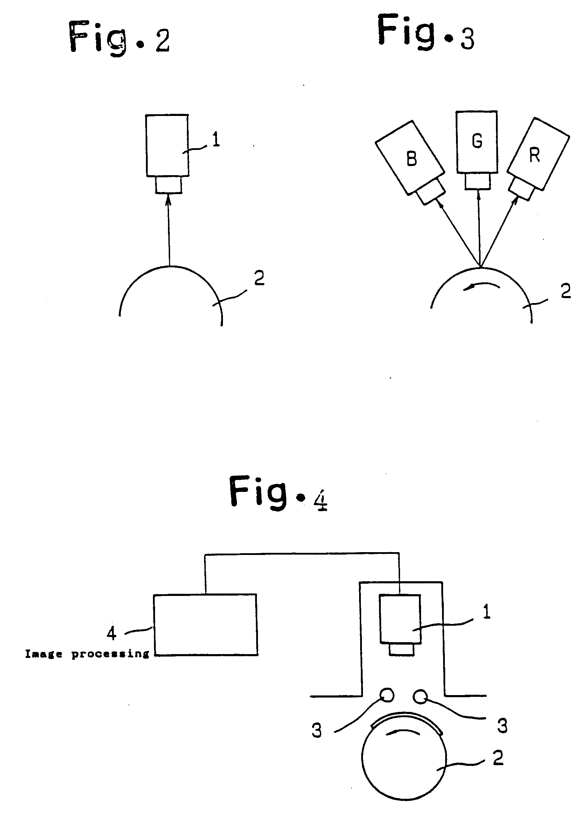

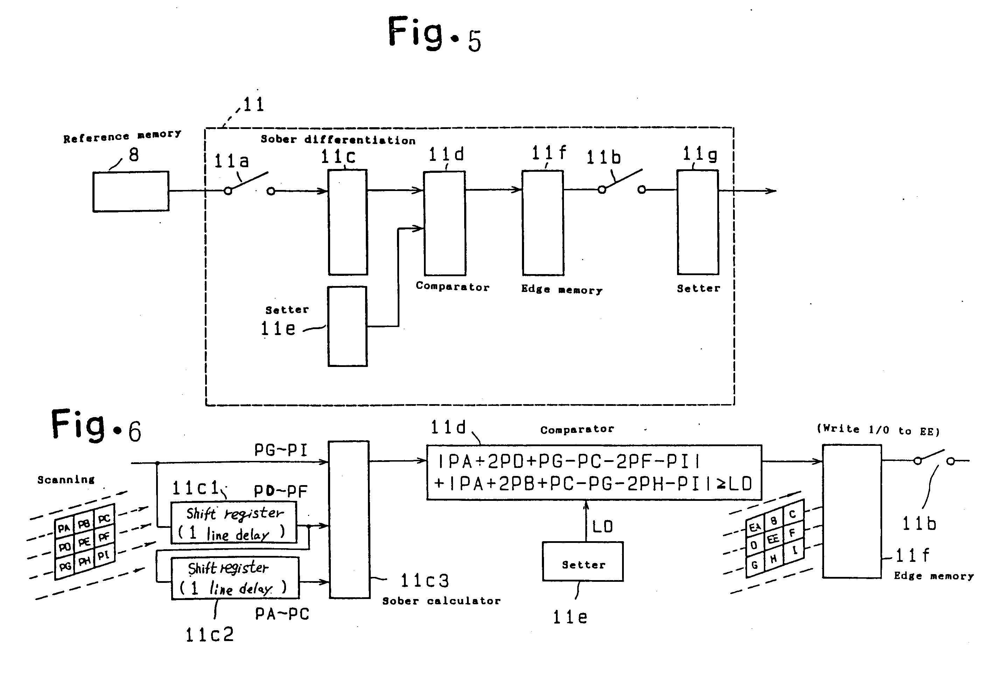

The present invention will now be described in detail with reference to the drawings. Fig.1 is a block diagram of a quality inspection device for a printed matter. Fig.1 shows a circuit which receives a printed pattern by a R-G-B spectral light receiving device to perform defect detection for individual R, G, and B systems. Referring to Fig.1, a color line camera 1 uses a CCD as an imaging device to output density level image information divided into R, G, and B colors for every line of a printed image and, as shown in Fig.2, receives reflected light from a printed matter placed on a cylinder 2. In this case, three cameras dedicated to R, G, and B may be used as shown in Fig.3, in which the individual cameras take the image of the same part of the cylinder 2 with the same view field. During the imaging by the camera 1, as shown in Fig.4, the printed matter on the cylinder 2 is illuminated by a light source 3 with a high intensity, and the reflected light is received by the camera 1. In Fig.4, numeral 4 indicates an image processing circuit which includes all circuits after an A/D converter 6 in Fig.1 and processes image data outputted from the color line camera 1 shown in Fig.1.

Referring again to Fig.1, the color line camera 1 is connected to a speed control circuit 5 to control the scanning speed according to changes in speed of the cylinder and correct for changes in amounts of light received by the part to be imaged.

The color line camera 1 is connected to the A/D converter 6. The A/D converter 6 converts analog density information of the individual R, G, and B colors for one line from the color line camera 1 to digital information. The A/D converter 6 is provided at its output end with a common terminal of a switch 7 which, when turned to one contact F, connects to a reference memory 8 and, when turned to the other contact K, connects to an inspection memory 9. The switch 7 is turned to the contact F to store reference image information of a reference printed matter into the reference memory 8, and is turned to the contact K to store the inspection image information of an inspected printed matter into the inspection memory 9. In this case, after the switch 7, there are provided three series of circuits for the individual R, G, and B colors.

Suppose a case in which the switch is turned to the contact F and reference image information of the reference (sample) printed matter on the cylinder is taken in the reference memory 8. The reference memory 8 is connected to a SUB memory 10 that follows, and the SUB memory 10 is inputted with a value from the reference memory 8 to calculate a difference from inspection image information of an inspected printed matter.

The reference memory 8 is connected to an edge control circuit 11. The edge control circuit 11 detects a sharp density changing area (edge portion) of reference image information, which is used for evaluation of the inspection image information, and has an arrangement within the broken lines shown in Fig.5.

Referring to Fig.5, numerals 11a and 11b are switches, and the switch 11a has a Sobel differentiation circuit 11c. The Sobel differentiation circuit 11c, which is for calculation to determine whether or not the objective picture element is an edge, has a shift registers 11c1 and 11c2 and a Sobel calculator 11c3 as shown in Fig.6. Functions of these circuits will now be described. When a central picture element PE shown in Fig.6 is determined whether or not it is an edge, not only the picture elements corresponding the central picture element and before and after the central picture element PE, but also the picture elements of the foregoing and next line are checked. Picture elements PA, PB, and PC of the foregoing line are stored in the shift register 11c2, picture elements PD, PE, and PF of the same line are stored in the shift register 11c1, and picture elements PG, PH, and PI, together with the picture elements PA, PB, PC, PD, PE, and PF, are inputted to the Sobel calculator 11c3. In the Sobel calculator 11c3, the upper, lower, right, and left picture elements PB, PH, PF, and PD are weighted relative to the central picture elements to obtain a horizontal differential value and a vertical differential value. The horizontal differential value is obtained by the addition of the foregoing and next lines and the subtraction between the foregoing and next lines, as $\{PA + 2PB + PC\} - \{PC + 2PH + PI\}$. The vertical differential value is obtained by the addition of the vertical lines one picture element before and after the central picture element PE and the subtraction between the vertical lines, as $\{PA + 2PD + PG\} - \{PC + 2PF + PI\}$. Output of the Sobel calculator 11c3, that is, output of the Sober differentiation circuit 11c, is obtained as a Sobel differential value comprising |horizontal differential value| + |vertical differential value|.

In a comparator 11d, the Sobel differential value is compared with a threshold value $L_D$ set by a setter 11e to determine which is greater.

When the Sobel differential value is greater than the threshold value $L_D$, the central picture element is determined as an edge, or when the Sobel differential value is less than the threshold value $L_D$, the central picture element is determined as a non-edge (no a sharp density changing area), and the output of the comparator 11d is stored at a corresponding address of an edge memory 11f.

Thus, each picture element of each line of the reference image information of the reference printed matter is determined whether it is an edge or a non-edge, and the result is stored in the edge memory.

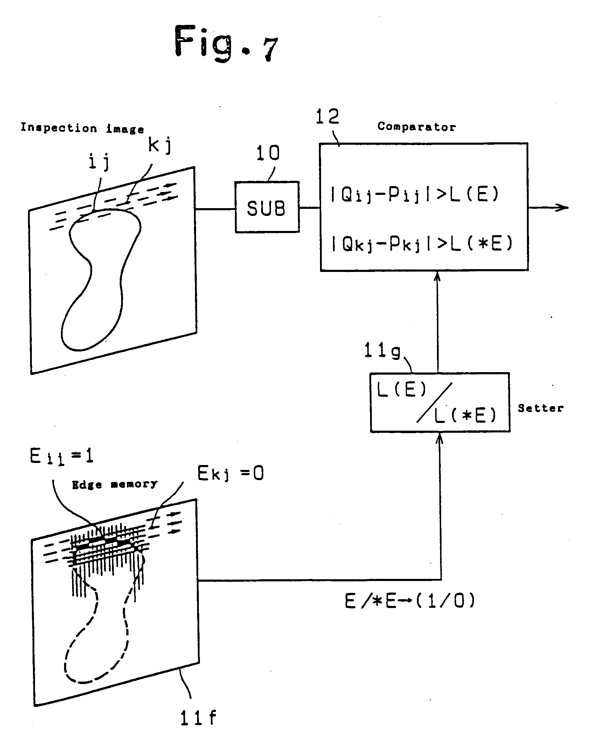

After that, when determination of the inspection image information of the inspected printed matter is made with the switch 7 shown in Fig.7 turned to the contact K, the edge memory 11f is canned in synchronization with scanning of each line of the inspection image information, the setting value of a setter 11g for comparison is selected according to whether the address is an edge or a non-edge. Specifically, as shown in Fig.7, addresses of the edge memory 11f are scanned according to scanning of the inspection image information, and the result (edge or non-edge) is taken out as E(edge)-/*E(non-edge) = (1/0) to select a value L(E)/L(*E) of the setter 11g.

When a printed matter to be inspected is completed and imaged by the color line camera 1, as described above, the switch 7 shown in Fig.1 is turned to the contact K to once store each line of the inspection image information in the inspection memory 9. Then, the SUB memory 10 compares the inspection image information in the inspection memory 9 with the reference image information in the reference memory 8 to obtain a difference for each picture element, which is stored. Thus, as shown in Fig.7, for example, for picture elements of positions ij and kj, digital values $Q_{ij}$ and $Q_{kj}$ of the inspection image information are subtracted by digital values $P_{ij}$ and $P_{kj}$, and $|Q_{ij} - P_{ij}|$ and $|Q_{kj} - P_{kj}|$ for addresses ij and kj are stored in the SUB memory 10.

The comparator 12 compares information of the SUB memory 10 with the output of the edge control circuit 11, that is the selected value L(E) or L(*E) of the setter 11g, to determine whether the picture element is an edge or a non-edge and output a normal or defect signal of the inspection image information.

In the above description the stage following the SUB memory 10 is directly connected to the comparator 12. However, before comparison by the comparator 12, the differential value of the SUB memory 10 may be once stored in a different memory.

In the above description, only one of the three series of circuits for R, G, and B colors is described. Actually, however, three series of circuits for the three colors are required, except for the case of black-and-white printed matter, which requires only one series of the circuits.

As described above with reference to the embodiment, the present invention detects and processes a sharp density changing area to reduce misjudgment, which enables enhanced performance of the inspection device. When used in-line, operator's burden can be reduced and quality of the product fed to the subsequent process is guaranteed. When used off-line, the device can be incorporated in a dedicated inspection system to reduce the number of inspectors, thereby achieving improved quality control of printed matters, a reduction in printing cost, and a shortened delivery time of the product.

Furthermore, due to the color processing, image processing close to human eyes can be performed.

## Claims

1. A quality inspection device for printed matter for processing a sharp density changing area of reference image information of a reference printed matter by an edge control circuit (11) to determine the presence of a defect of inspection image information of an inspected printed matter, said edge control circuit (11) comprising:

    a Sobel differentiation circuit (11c) for weighting peripheral picture elements (PA, PB, PC, PD, PF, PG, PH, PI) relative to a central picture element (PE) of said reference image information and thereafter adding the absolute value of the horizontal difference between the weighted upper picture elements (PA, PB, PC) and the weighted lower picture elements (PG, PH, PI) and the absolute value of the difference between the weighted right picture elements (PC, PF, PI) and the weighted left picture elements (PA, PD, PG) to obtain a Sobel differential value of said central picture element (PE);

    a first comparator (11d) for comparing the output of said Sobel differentiation circuit (11c) and a preset value (LD) and outputting the result in the form of 1/0;

    an edge memory (11f) for storing the output (1/0) of said first comparator (11d) as information as to whether or not said central picture element (PE) is in said sharp density changing area;

    a setter (11g) for selecting a predetermined tolerance L(E)/L(E*) according to the 1/0 output of said edge memory (11f);

    said device further comprising a second comparator (12) for comparing the difference between said inspection image information and said reference image information with the output of the edge control circuit (11), that is the selected value (L(E) or L(E*)) of the setter (11g), and, in response thereto, outputting a normal or defect signal.

2. The device of claim 1, wherein said reference image information and said inspection image information are obtained by a color line camera (1) outputting image information for one line.

3. The device of claim 1 comprising a SUB memory (10) for storing the difference between said inspection image information and said reference image information.

4. The device of Claim 1 comprising three units of said edge control circuits provided in parallel for processing individual R(ed), G(reen) and B(lue) color signals.

5. A quality inspection method for a printed matter for detecting a sharp density changing area of reference image information of a reference printed matter to determine the presence of a defect of inspection image information of an inspected printed matter, comprising:

weighting peripheral picture elements (PA, PB, PC, PD, PF, PG, PH, PI) relative to a central picture element (PE) of said reference image information and thereafter adding the absolute value of the horizontal difference between the weighted upper picture elements (PA, PB, PC) and the weighted lower picture elements (PG, PH, PI) and the absolute value of the difference between the weighted right picture elements (PC, PF, PI) and the weighted left picture elements (PA, PD, PG) to obtain a Sobel differential value of said central picture element (PE);

comparing the output of said Sobel differentiation circuit (11c) and a preset value (LD) and outputting the result in the form of 1/0;

storing the output (1/0) of said comparison as information as to whether or not said central picture element (PE) is in said sharp density changing area;

selecting a predetermined tolerance L(E)-/L(E*) according to the 1/0 output an edge memory (11f); and

comparing the difference between said inspection image information and said reference image information with the output of the edge control circuit (11), that is the selected value (L(E) or L(E*)) of a setter (11g), and outputting a normal or defect signal.

**Patentansprüche**

1. Vorrichtung zur Qualitätsprüfung von Drucksachen, um mittels eines Kantensteuerschaltkreises (11) einen Bereich mit sich abrupt verändernder Dichte der Referenzbildinformation einer Referenzdrucksache zu verarbeiten, um das Vorhandensein eines Fehlers der Prüfbildinformation einer geprüften Drucksache zu erfassen, wobei der Kantensteuerschaltkreis (11) aufweist:

einen Sobel-Differenzierschaltkreis (11c), um Randbildelemente (PA, PB, PC, PD, PF, PG, PH, PI) bezüglich eines mittleren Bildelementes (PE) der Referenzbildinformation zu gewichten und um anschließend den Absolutwert der horizontalen Differenz zwischen den gewichteten oberen Bildelementen (PA, PB, PC) und den gewichteten unteren Bildelementen (PG, PH, PI) und den Absolutwert der Differenz zwischen den gewichteten rechten Bildelementen (PC, PF, PI) und den gewichteten linken Bildelementen (PA, PD, PG) zu addieren, um einen Sobel-Differentialwert des mittleren Bildelementes (PE) zu erhalten;

einen ersten Komparator (11d), um die Ausgabe des Sobel-Differenzierschaltkreises (11c) mit einem vorliegenden Wert (LD) zu vergleichen und um das Ergebnis in Form von 1/0 auszugeben;

einen Kantenspeicher (11f), um die Ausgabe (1/0) des ersten Komparators (11d) als Information zu speichern, ob sich das mittlere Bildelement (PE) in dem Bereich mit sich abrupt verändernder Dichte befindet oder nicht;

einem Einstellmittel (11g), um entsprechend der 1/0-Ausgabe des Kantenspeichers (11f) eine bestimmte Toleranz L(E)/L(E*) auszuwählen;

wobei die Vorrichtung außerdem einen zweiten Komparator (12) aufweist, um die Differenz zwischen der Prüfbildinformation und der Referenzbildinformation mit der Ausgabe des Kantensteuerschaltkreises (11), d.h. dem ausgewählten Wert (L(E) oder L(E*)) des Einstellmittels (11g), zu vergleichen und um, als Reaktion darauf, ein Normal- oder ein Fehlersignal auszugeben.

2. Vorrichtung nach Anspruch 1, wobei die Referenzbildinformation und die Prüfbildinformation durch eine Farbzeilenkamera (1) erzeugt werden, welche die Bildinformation für eine Zeile ausgibt.

3. Vorrichtung nach Anspruch 1, mit einem SUB-Speicher (10), um die Differenz zwischen der Prüfbildinformation und der Referenzbildinformation zu speichern.

4. Vorrichtung nach Anspruch 1, mit drei Kantensteuerschaltkreiseinheiten, die parallel angeordnet sind, um einzelne (R)ote, (G)rüne und (B)laue Farbsignale zu verarbeiten.

5. Verfahren zur Qualitätsprüfung einer Drucksache, um einen Bereich mit sich abrupt verändernder Dichte der Referenzbildinformation einer Referenzdrucksache zu verarbeiten, um das Vorhandensein eines Fehlers der Prüfbildinformation einer geprüften Drucksache zu erfassen, durch:

Gewichten von Randbildelementen (PA, PB, PC, PD, PF, PG, PH, PI) bezüglich eines mittleren Bildelementes (PE) der Referenzbildinformation und anschließendes Addieren des Absolutwertes der horizontalen Differenz zwischen den gewichteten oberen Bildelementen (PA, PB, PC) und den gewichteten unteren Bildelementen (PG, PH, PI) und des Absolutwertes der Differenz zwischen den gewichteten rechten Bildelementen (PC, PF, PI) und den gewichteten linken Bildelementen (PA, PD, PG), um einen Sobel-Differentialwert des mittleren Bildelementes (PE) zu erhalten;

vergleichen der Ausgabe des Sobel-Differenzierschaltkreises (11c) mit einem vorliegenden Wert (LD) und Ausgeben des Ergebnisses in Form von 1/0;

speichern der Ausgabe (1/0) des Vergleiches als Information, ob sich das mittlere Bildelement (PE) in dem Bereich mit sich abrupt verändernder Dichte befindet, oder nicht;

auswählen einer bestimmten Toleranz L-(E)/L(E*) entsprechend der 1/0-Ausgabe eines Kantenspeichers (11f); und

vergleichen der Differenz zwischen der Prüfbildinformation und der Referenzbildinformation mit der Ausgabe des Kantensteuerschaltkreises (11), d.h. dem ausgewählten Wert (L(E) oder L(E*)) eines Einstellmittels (11g), und, als Reaktion darauf, Ausgeben eines Normal- oder eines Fehlersignals.

## Revendications

1. Un dispositif d'inspection de qualité pour un document imprimé, destiné à traiter une zone à variation abrupte de densité d'une information d'image de référence d'un document imprimé de référence au moyen d'un circuit de commande de bord (11), pour déterminer la présence d'un défaut d'une information d'image d'inspection d'un document imprimé inspecté, ce circuit de commande de bord (11) comprenant :

un circuit de différentiation de Sobel (11c) pour pondérer des éléments d'image périphériques (PA, PB, PC, PD, PF, PG PH, PI) par rapport à un élément d'image central (PE) de l'information d'image de référence, et pour additionner ensuite la valeur absolue de la différence horizontale entre les éléments d'image supérieurs pondérés (PA, PB, PC) et les éléments d'image inférieurs pondérés (PG, PH, PI), et la valeur absolue de la différence entre les éléments d'image droits pondérés (PC, PF, PI) et les éléments d'image gauches pondérés (PA, PD, PG), pour obtenir une valeur différentielle de Sobel de l'élément d'image central (PE);

un premier comparateur (11d) pour comparer l'information de sortie du circuit de différentiation de Sobel (11c) et une valeur fixée à l'avance (LD), et pour fournir le résultat en sortie sous la forme 1/0;

une mémoire de bord (11f) pour enregistrer l'information de sortie (1/0) du premier comparateur (11d), à titre d'information indiquant si l'élément d'image central (PE) se trouve ou non dans la zone à variation abrupte de densité;

un dispositif de réglage (11g) pour sélectionner une tolérance prédéterminée L(E)/L(E*) conformément à l'information de sortie 1/0 de la mémoire de bord (11f);

ce dispositif comprenant en outre un second comparateur (12) pour comparer la différence entre l'information d'image d'inspection et l'information d'image de référence avec l'information de sortie du circuit de commande de bord (11), c'est-à-dire la valeur sélectionnée (L(E) ou L(E*)) du dispositif de réglage (11g), et pour fournir en réponse un signal d'état normal ou de défaut.

2. Le dispositif de la revendication 1, dans lequel l'information d'image de référence et l'information d'image d'inspection sont obtenues par une caméra en couleurs (1) qui fournit une information d'image pour une ligne.

3. Le dispositif de la revendication 1, comprenant une mémoire de soustraction (10) pour enregistrer la différence entre l'information d'image d'inspection et l'information d'image de référence.

4. Le dispositif de la revendication 1, comprenant trois exemplaires des circuits de commande de bord, disposés en parallèle pour traiter des signaux individuels pour les couleurs R (rouge), G (vert) et B (bleu).

5. Un procédé d'inspection de qualité pour un document imprimé, destiné à détecter une zone à variation abrupte de densité d'une information d'image de référence d'un document imprimé de référence, pour déterminer la présence d'un défaut d'une information d'image d'inspection d'un document imprimé inspecté, comprenant :

la pondération d'éléments d'image périphériques (PA, PB, PC, PD, PF, PG, PH, PI) par rapport à un élément d'image central (PE) de l'information d'image de référence, et ensuite l'addition de la valeur absolue de la différence horizontale entre les éléments d'image supérieurs pondérés (PA, PB, PC) et les éléments d'image inférieurs pondérés (PG, PH, PI), et de la valeur absolue de la différence entre les éléments d'image droits pondérés (PC, PF, PI) et les éléments d'image gauches pondérés (PA, PD, PG), pour obtenir une valeur différentielle de Sobel de l'élément d'image central (PE);

la comparaison de l'information de sortie du circuit de différentiation de Sobel (11c) et d'une valeur fixée à l'avance (LD) et la fourniture du résultat en sortie sous la forme 1/0;

l'enregistrement de l'information de sortie (1/0) de la comparaison, à titre d'information indiquant si l'élément d'image central (PE) est ou non dans la zone à variation abrupte de densité;

la sélection d'une tolérance prédéterminée L(E)/L(E*) conformément à l'information de sortie 1/0 d'une mémoire de bord (11f); et

la comparaison de la différence entre l'information d'image d'inspection et l'information d'image de référence avec l'information de sortie du circuit de commande de bord (11), c'est-à-dire la valeur sélectionnée (L(E) ou L-(E*)) d'un dispositif de réglage (11g) et l'émission d'un signal d'état normal ou de défaut.

# Fig.1

EP 0 443 062 B1

# Fig.2

# Fig.3

# Fig.4

Image processing

9

## Fig.5

Reference memory 8

Sober differentiation 11

11a

11c

11d Comparator

11f 11b Edge memory

11g Setter

Setter 11e

## Fig.6

Scanning

| PA | PB | PC |
|----|----|----|
| PD | PE | PF |
| PG | PH | PI |

11c1 Shift register (1 line delay)

11c2 Shift register (1 line delay)

PG~PI

PD~PF

PA~PC

11c3 Sober calculator

11d Comparator

$$|PA+2PD+PG-PC-2PF-PI| \\ +|PA+2PB+PC-PG-2PH-PI| \geq LO$$

Setter 11e

LO

(Write 1/0 to EE)

11b

| EA | B | C |
|----|---|---|
| 0 | EE | F |
| G | H | I |

Edge memory 11f

# Fig. 7

$$|Q_{ij} - P_{ij}| > L(E)$$

$$|Q_{kj} - P_{kj}| > L(*E)$$

$$E / *E \rightarrow (1/0)$$